# EUROPEAN PATENT APPLICATION

(11) **EP 4 818 555 A1**
(43) Date of publication of application: **07.10.2026**
(21) Application number: 24896553.5
(22) Date of filing: 27.11.2024
(51) Int. Cl.: F16H 25/22, F16H 37/12

(54) **TRANSMISSION MECHANISM**

(30) Priority: 27.11.2023 CN 202311595385; 27.11.2023 CN 202323207067 U
(71) Applicant: Keiper (Changshu) Seating Mechanisms Co., Ltd., Suzhou, Jiangsu 215500 (CN)
(72) Inventor: XU, Weiyun, Suzhou, Jiangsu 215500 (CN); LIU, Shaochuan, Suzhou, Jiangsu 215500 (CN); WANG, Chuan, Suzhou, Jiangsu 215500 (CN); WU, Peigui, Suzhou, Jiangsu 215500 (CN); NI, Hongbin, Suzhou, Jiangsu 215500 (CN); ZHANG, Jiani, Suzhou, Jiangsu 215500 (CN)
(74) Representative: Hoefer & Partner Patentanwälte mbB
(86) International application number: PCT/CN2024/134754
(87) International publication number: WO 2025/113466

(57) **Abstract**

A transmission mechanism, comprising a worm (110) and a nut (120), wherein an outer side of the worm is provided with first teeth (111), and an outer side of the nut is provided with second teeth (121), the first teeth and the second teeth being engaged with each other. The nut is internally hollow, and an inner wall of the nut is provided with third teeth; and the nut is configured to be sleeved on an outer side of a lead screw (300), the third teeth being configured to fit with fourth teeth on an outer side of the lead screw. The metal teeth of the worm and the plastic teeth of the nut are engaged with each other so as to achieve transmission, such that noises can be reduced, thereby improving the sound performance.

## Description

### BACKGROUND OF THE INVENTION

### 1.Field of the Invention

The present invention relates to the field of vehicle components, and more particularly to a transmission mechanism for a vehicle.

### 2. Related Art

In a vehicle, a transmission mechanism is usually required to achieve transmission and relative movement between two components. For example, a vehicle seat may be connected to a vehicle frame (e.g., a floor assembly) via a transmission mechanism, so that the seat can move forward and rearward relative to the vehicle floor to achieve seat adjustment; alternatively, a display device on the vehicle instrument panel may be connected to the vehicle frame via a transmission mechanism, so that the display device can move between a driver seat and a co-driver seat relative to the vehicle frame.

Existing transmission mechanisms generally adopt a worm and a nut. The nut is provided with external teeth. A motor is connected to the worm, the worm is engaged with the nut, and the nut is further connected to other elements, so as to transmit power of the motor to a desired element and realize relative movement between the two components.

However, the existing worm and nut are both made of metal, and relatively loud noise is generated when the two are engaged with each other.

### SUMMARY OF THE INVENTION

An object of the present invention is to provide a transmission mechanism, which realizes transmission through engaging between metal teeth and plastic teeth, thereby reducing noise during engaging.

Based on the above object, the present invention provides a transmission mechanism, comprising a worm and a nut, wherein an outer side of the worm is provided with first teeth, an outer side of the nut is provided with second teeth, and the first teeth and the second teeth are engaged with each other. The nut is internally hollow, and an inner wall of the nut is provided with third teeth; the nut is configured to be sleeved on an outer side of a lead screw, and the third teeth are configured to fit with fourth teeth on an outer side of the lead screw.

Further, the nut comprises a sleeve and a nut shaft, wherein the sleeve is sleeved on an outer side of the nut shaft and fixedly connected with the nut shaft; the second teeth are formed on an outer side of the sleeve; the nut shaft is internally hollow, and the third teeth are formed on an inner wall of the nut shaft.

Further, the worm and the first teeth are both made of metal, and the second teeth are made of plastic.

Further, the nut shaft and the third teeth are both made of metal; and/or
a metal shaft shoulder is arranged on the nut shaft, and the metal shaft shoulder abuts against one side of the sleeve.

Further, a first limiting structure is arranged on an outer side of the nut shaft, a second limiting structure is arranged on an inner wall of the sleeve, and the first limiting structure and the second limiting structure are fitted with each other to limit relative rotation between the sleeve and the nut shaft.

Further, the nut shaft comprises a first metal shaft and a first plastic shaft which are connected in an axial direction, wherein the sleeve is sleeved on outer sides of the first metal shaft and the first plastic shaft and fixedly connected with the first metal shaft and the first plastic shaft; the first metal shaft is internally hollow and provided with first metal internal teeth on an inner wall thereof, the first plastic shaft is internally hollow and provided with first plastic internal teeth on an inner wall thereof, and the first plastic internal teeth and the first metal internal teeth jointly form the third teeth.

Further, the nut shaft comprises a second metal shaft and a second plastic shaft, wherein the second metal shaft is internally hollow and provided with second metal internal teeth on an inner wall thereof, and the second plastic shaft is internally hollow and provided with second plastic internal teeth on an inner wall thereof; the sleeve is sleeved on an outer side of the second metal shaft and fixedly connected with the second metal shaft, the second metal shaft is sleeved on an outer side of the second plastic shaft and fixedly connected with the second plastic shaft, the second plastic internal teeth are identical to the second metal internal teeth, and the second plastic internal teeth form the third teeth.

Further, the transmission mechanism further comprises two shells arranged oppositely in a radial direction of the nut shaft, wherein the two shells are detachably spliced together to form a box body, an installation space is formed between the two shells, the worm and the nut are located or partially located in the installation space, two ends of the worm are respectively installed on the two shells, outwardly protruding support structures are formed at two ends of the box body, and two ends of the nut shaft are respectively placed on the two support structures.

Further, a bushing is arranged on each shell and used for supporting an end of the worm; the two shells are made of alloy or metal, and the bushing is made of plastic.

Further, a third limiting structure is arranged on the bushing, a fourth limiting structure is arranged on each shell, and the third limiting structure and the fourth limiting structure are fitted with each other to limit relative rotation between the bushing and the shell.

Further, elastic covers are respectively fixed at two ends of the box body in the axial direction of the nut shaft, each elastic cover is provided with a through hole, and the support structures are located in the through holes.

Further, complementary-shaped structures are arranged on the shells and the elastic covers to realize positioning and fixation between the shells and the elastic covers.

In the transmission mechanism of the present invention, transmission is realized through mutual engaging between the metal teeth of the worm and the plastic teeth of the nut, so that noise can be reduced and acoustic performance can be improved; the nut shaft of the nut may be a combination of a metal part and a plastic part, or in a form that a metal shaft is sleeved on an outer side of a plastic shaft, so that fitting between the lead screw and the nut is also fitting between metal and plastic, thereby reducing noise during fitting between the lead screw and the nut; the plastic bushings arranged on the shells support the worm, improving roughness of a fitting surface with the worm, improving mechanical efficiency and reducing noise; the two elastic covers can not only improve acoustic performance but also eliminate manufacturing gaps; the two elastic covers and the two shells are provided with complementary-shaped structures, which can limit deformation of the two elastic covers during braking, so that a forward shifting feeling of an occupant during braking is lower and comfort is higher.

### BRIEF DESCRIPTION OF THE DRAWINGS

Fig. 1 is a structural schematic diagram of the transmission mechanism engaged with a lead screw according to the present invention;
Fig. 2 is an exploded view of the transmission mechanism according to an embodiment of the present invention;
Fig. 3A is a structural schematic diagram of a first structure of the nut according to an embodiment of the present invention;
Fig. 3B is a half-sectional view of the nut in Fig. 3A;
Fig. 3C is a structural schematic diagram of the sleeve of the nut in Fig. 3A from one viewing angle;
Fig. 3D is a structural schematic diagram of the sleeve of the nut in Fig. 3A from another viewing angle;
Fig. 3E is a structural schematic diagram of the nut shaft of the nut in Fig. 3A;
Fig. 4A is a structural schematic diagram of a second structure of the nut according to an embodiment of the present invention;
Fig. 4B is a half-sectional view of the nut in Fig. 4A;
Fig. 4C is a structural schematic diagram of the sleeve and the first plastic shaft of the nut in Fig. 4A;
Fig. 4D is a structural schematic diagram of the first metal shaft of the nut in Fig. 4A;
Fig. 5A is a structural schematic diagram of a third structure of the nut according to an embodiment of the present invention;
Fig. 5B is a half-sectional view of the nut in Fig. 5A;
Fig. 5C is a structural schematic diagram of the sleeve and the second plastic shaft of the nut in Fig. 5A;
Fig. 5D is a structural schematic diagram of the second metal shaft of the nut in Fig. 5A;
Fig. 6 is a structural schematic diagram of the two shells spliced together according to an embodiment of the present invention;
Fig. 7 is a structural schematic diagram of an inner side of each shell according to an embodiment of the present invention;
Fig. 8 is a structural schematic diagram of an outer side of each shell according to an embodiment of the present invention;
Fig. 9 is a structural schematic diagram of each elastic cover according to an embodiment of the present invention.

### DESCRIPTION OF THE ENABLING EMBODIMENT

Preferred embodiments of the present invention are described below in detail with reference to the accompanying drawings.

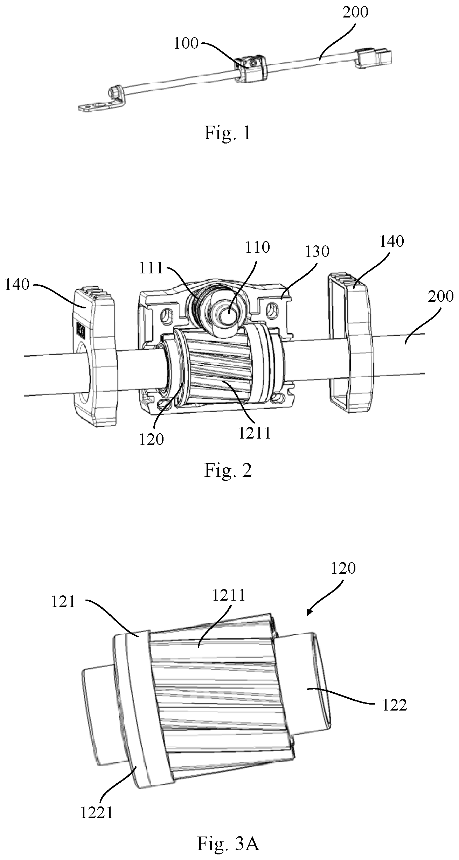

As shown in Fig. 1 and Fig. 2, an embodiment of the present invention provides a transmission mechanism 100, which comprises a worm 110 and a nut 120, wherein an outer side of the worm 110 is provided with first teeth 111, an outer side of the nut 120 is provided with second teeth 1211, and the first teeth 111 and the second teeth 1211 are engaged with each other. The nut 120 is internally hollow, and an inner wall of the nut 120 is provided with third teeth (e.g., threaded teeth); the nut 120 is configured to be sleeved on an outer side of a lead screw 300, and the third teeth are fitted with fourth teeth on an outer side of a lead screw 200, so that the nut 120 and the lead screw 200 form a ball screw structure; the worm 110 and the first teeth 111 are both made of a metal material, and the second teeth 1211 are made of plastic. In use, the transmission mechanism 100 can be fixedly connected with a first component (not shown in the figures), the lead screw 200 is fixed on a second component (not shown in the figures), a motor can be further fixed on the first component, and the motor is connected with the worm 110 to drive the worm 110 to rotate around its own axis. Since the first teeth 111 and the second teeth 1211 are engaged with each other, rotation of the worm 110 will cause the nut 120 to rotate synchronously, and rotation of the nut 120 will cause the nut 120 to move linearly along the lead screw 200, i.e., the transmission mechanism 100 moves linearly along the lead screw 200, so that the first component moves linearly relative to the second component. Since the sound frequency recognizable by human ears is 20 Hz to 20,000 Hz, the rotation speed of the motor can be as high as 25,000 r/min with a frequency of 41.67 Hz, the frequency of the worm 110 can reach 83.34 Hz, and if the transmission ratio is 7.5, the frequency of the nut 120 is 11.11 Hz. Therefore, human ears are more sensitive to the sound of the worm 110. By arranging the first teeth 111 of the worm 110 as metal teeth, the dimensional accuracy thereof is not limited by an injection molding process, the precision is higher, engaging is more stable, and noise during engaging can be lower. In addition, the second teeth are plastic teeth, and the plastic teeth can deform and absorb gaps during engaging with the metal teeth, so that noise can be further reduced and the acoustic performance of the transmission mechanism 100 can be improved.

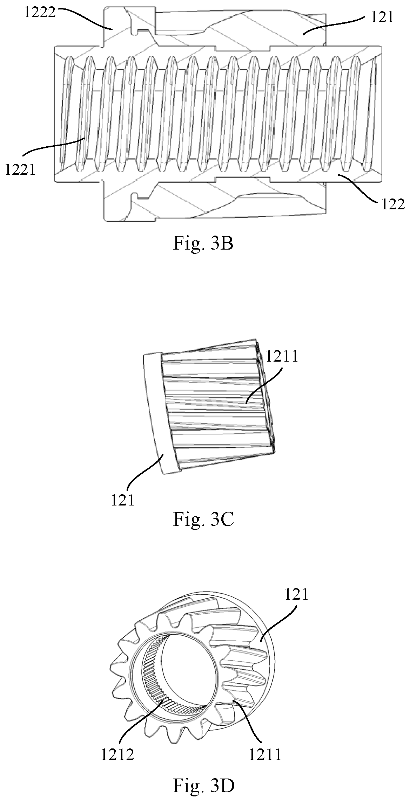

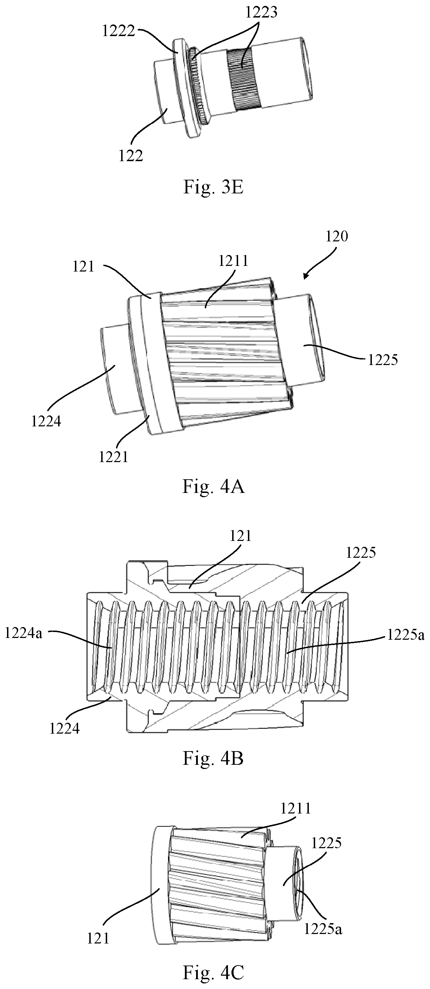

As shown in Fig. 3A, Fig. 3B, Fig. 3C, Fig. 3D and Fig. 3E, in some embodiments, the nut 120 of the first structure may comprise a sleeve 121 and a nut shaft 122, wherein the sleeve 121 is sleeved on an outer side of the nut shaft 122 and fixedly connected with the nut shaft 122, the sleeve 121 is made of plastic, and the second teeth 1211 are formed on an outer side of the sleeve 121. The nut shaft 122 is internally hollow and provided with third teeth 1221 on an inner wall thereof, the nut shaft 122 and the third teeth 1221 are both made of metal, and the nut shaft 122 is configured to be sleeved on an outer side of the lead screw 200, with the third teeth 1221 fitted with the fourth teeth on the outer side of the lead screw 200. The nut 120 is formed by combining the plastic sleeve 121 and the metal nut shaft 122, which not only ensures the strength of the nut 120 but also enables the nut 120 to be engaged with the metal first teeth 111 of the worm 110 through the plastic second teeth 1211, thereby reducing noise.

In some embodiments, tooth ends of the second teeth 1211 are formed with C-chamfers or rounded corners, so as to reduce the area thereof, improve flatness and improve engaging precision of the teeth.

A metal shaft shoulder 1222 may be further arranged on the nut shaft 122, and the metal shaft shoulder 1222 abuts against one side of the sleeve 121 to bear axial impact force during collision or braking, prevent the sleeve 121 of the nut 120 from being separated from the nut shaft 122 under the action of axial force, and avoid injury to an occupant caused by relative movement between the first component and the second component due to collision (e.g., collision with an instrument panel).

A first limiting structure 1223 may be further formed on an outer side of the nut shaft 122, a second limiting structure 1212 is arranged on an inner wall of the sleeve 121, and the first limiting structure 1223 and the second limiting structure 1212 are fitted with each other to limit relative rotation between the sleeve 121 and the nut shaft 122. In this way, after the sleeve 121 and the nut shaft 122 are fixed, the first limiting structure 1223 and the second limiting structure 1212 can also realize limiting, so that the sleeve 121 will not be easily disconnected from the nut shaft 122 to cause relative rotation between the sleeve 121 and the nut shaft 122 after being subjected to torque. For example, the first limiting structure 1223 and the second limiting structure 1212 may be fitting threads, teeth, or protrusions and grooves, etc., to realize limiting.

The metal nut shaft 122 and the plastic sleeve 121 may be integrally formed by insert injection molding. Firstly, the metal nut shaft 122 is formed to have structures such as the second teeth 1221, the shaft shoulder 1222 and the first limiting structure 1223, then the nut shaft 122 is placed into a pre-designed mold, and plastic is injected so that the plastic sleeve 121 wraps the nut shaft 122 and is fixed with the nut shaft 122. It can be understood that, besides insert injection molding, the nut shaft 122 and the sleeve 121 may also be fixed together by bonding, clamping, hot melt welding or any other suitable manner.

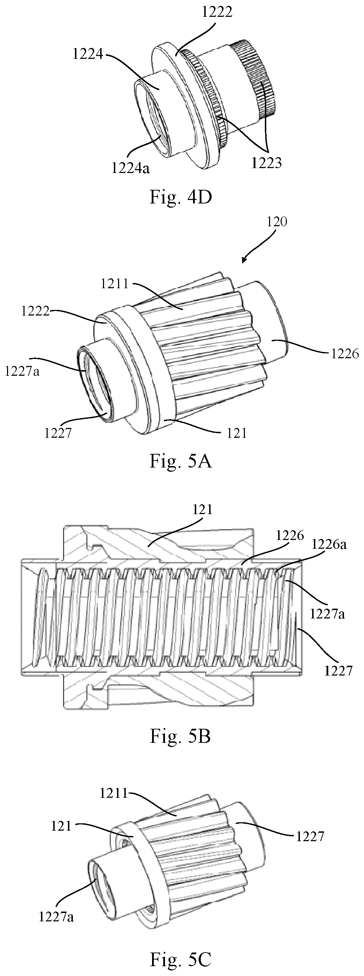

As shown in Fig. 4A, Fig. 4B, Fig. 4C and Fig. 4D, the nut 120 of the second structure comprises a sleeve 121 and a nut shaft 122, wherein the structure of the sleeve 121 is the same as that of the sleeve in the nut 120 of the first structure, and the nut shaft 122 is improved on the basis of the nut shaft in the nut 120 of the first structure to comprise a first metal shaft 1224 and a first plastic shaft 1225 which are connected in an axial direction. The first metal shaft 1224 is internally hollow and provided with first metal internal teeth 1224a on an inner wall thereof, the first plastic shaft 1225 is internally hollow and provided with first plastic internal teeth 1225a on an inner wall thereof, and the first metal internal teeth 1224a and the first plastic internal teeth 1225a jointly form the second teeth 1221 of the nut shaft 122. The sleeve 121 is sleeved on outer sides of the first metal shaft 1224 and the first plastic shaft 1225 and fixedly connected with them. Similarly to the nut of the first structure, the metal shaft shoulder 1222 and the first limiting structure 1223 are both arranged on the first metal shaft 1224. That is to say, the only difference between the nut of the second structure and the nut of the first structure is that the nut shaft 122 is arranged to consist of the first metal shaft 1224 and the first plastic shaft 1225 in the nut of the second structure. In this way, the strength of the nut shaft 122 is ensured, and noise is reduced and acoustic performance is improved by engaging part of the plastic internal teeth 1225a with the fourth teeth of the lead screw 200.

Similarly to the nut of the first structure, the nut of the second structure may also be formed by insert injection molding, bonding, clamping, hot melt welding or any other suitable manner.

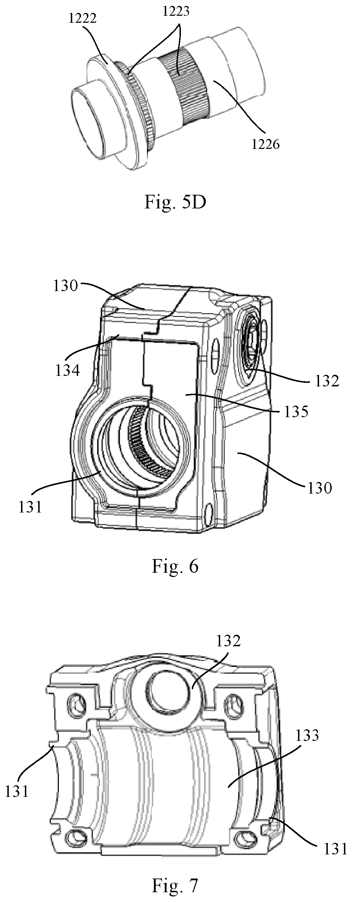

As shown in Fig. 5A, Fig. 5B, Fig. 5C and Fig. 5D, the nut 120 of the third structure comprises a sleeve 121 and a nut shaft 122, wherein the nut shaft 122 comprises a second metal shaft 1226 and a second plastic shaft 1227. The second metal shaft 1226 is internally hollow and provided with second metal internal teeth 1226a on an inner wall thereof, and the second plastic shaft 1227 is internally hollow and provided with second plastic internal teeth 1227a on an inner wall thereof. The second metal shaft 1226 is sleeved on an outer side of the second plastic shaft 1227 and fixedly connected with the second plastic shaft 1227, and the second plastic internal teeth 1227a are identical to the second metal internal teeth 1226a in structure and distribution. In this way, the second plastic shaft 1227 can wrap the second metal internal teeth 1226a of the second metal shaft 1226, and the second plastic internal teeth 1227a form the third teeth 1221 of the nut 120. During fitting with the lead screw 200, the second plastic internal teeth 1227a are directly engaged with the fourth teeth, thereby reducing noise, and the second metal internal teeth 1226a support the second plastic internal teeth 1227a to increase the strength thereof. The structure of the sleeve 121 is the same as that of the sleeve in the nut of the first structure, and the sleeve 121 is sleeved on an outer side of the second metal shaft 1226 and fixedly connected with the second metal shaft 1226. The sleeve 121 may also be fixedly connected with the second plastic shaft 1227. The metal shaft shoulder 1222 and the first limiting structure 1223 are both arranged on the second metal shaft.

The sleeve 121, the second metal shaft 1226 and the second plastic shaft 1227 may be integrally formed by insert injection molding. Firstly, the second metal shaft 1226 is formed, then the second metal shaft 1226 is placed into a pre-designed mold, and molten plastic is injected into the mold, so that the nut 120 of the third structure can be formed. At this time, the sleeve 121 and the second plastic shaft 1227 are fixed together. It can be understood that the sleeve 121, the second metal shaft 1226 and the second plastic shaft 1227 may be fixed together by bonding, clamping, hot melt welding or any other suitable manner.

As shown in Fig. 2 and Fig. 6, the transmission element 100 may further comprise two shells 130 arranged oppositely in a radial direction of the nut shaft 122 (one shell 130 is omitted in Fig. 2 for facilitating viewing of the structures of the worm 110 and the nut 120), wherein the two shells 130 are detachably spliced together to form a box body, an installation space is formed between the two shells 130, the worm 110 and the nut 120 are located or partially located in the installation space, two ends of the worm 110 are respectively installed on the two shells 130, outwardly protruding support structures 131 are formed at two ends of the box body and used for supporting ends of the nut shaft 122 of the nut 120. In this way, the worm 110 and the nut 120 can be fixed on the box body, and the box body can protect the worm 110 and the nut 120.

As shown in Fig. 7, a bushing 132 (e.g., fixed in a through hole on the shell 130) is arranged on each shell 130 and used for supporting an end of the worm 110, so that two ends of the worm 110 are respectively installed in the bushings 132 on the two shells 130. One end of the worm 110 can extend out of the bushing 132 and be connected with an output shaft of a motor, so that the worm 110 is driven to rotate by the motor. The two shells 130 may be made of metal or alloy to ensure sufficient strength, and the bushing 132 is made of plastic, which can absorb vibration during operation of the worm 110, thereby further reducing noise during operation of the worm 110 and improving the acoustic performance of the transmission mechanism 100.

The shell 130 and the bushing 132 may be fixed together by insert injection molding, bonding, clamping, hot melt welding or any other suitable manner.

An installation groove 133 may be formed on each shell 130, and the shape of the installation groove 133 is fitted with a half of the nut 120, so that the installation grooves 133 of the two shells 130 can accommodate the nut 120 and the nut 120 can rotate in the two installation grooves 133.

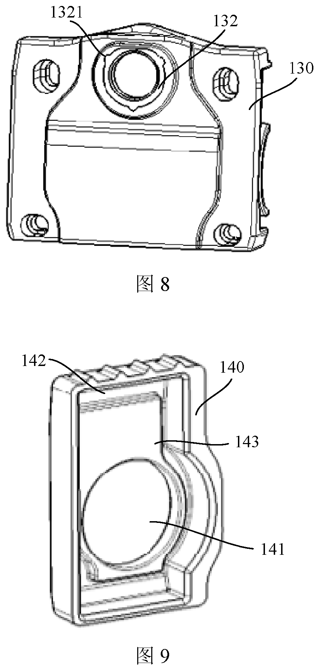

As shown in Fig. 8, a third limiting structure 1321 may be arranged on the bushing 132, a fourth limiting structure is arranged on each shell 130, and the third limiting structure 1321 and the fourth limiting structure are fitted with each other to limit relative rotation between the bushing 132 and the shell 130. The third limiting structure 1321 and the fourth limiting structure may be fitting protrusions and grooves, fitting teeth or any other suitable limiting structures.

As shown in Fig. 2, an elastic cover 140 is respectively arranged at each of two ends of the box body in the axial direction of the nut shaft 122, and the two elastic covers 140 are respectively fixedly connected with two ends of the box body. The two elastic covers 140 can play a buffering role during collision with other structures (e.g., stoppers for limiting the travel of the transmission mechanism), reduce impact feeling and lower noise during collision; the elastic element 140 can float up and down to adjust a position during assembly, thereby reducing assembly precision of the box body; elasticity of the elastic element 140 can also eliminate manufacturing gaps. As shown in Fig. 9, each elastic cover 140 is provided with a through hole 141, the support structure 131 is located in the through hole 141, and the lead screw 200 can enter an inner cavity of the nut shaft 122 through the through hole 141 and be connected with the nut shaft 122.

The elastic cover 140 may be made of rubber, elastic plastic, elastic foam material or any other suitable material.

Complementary-shaped structures are arranged on the shells 130 and the elastic covers 140 to realize positioning and fixation between the shells 130 and the elastic covers 140, improve posture stability of the shells 130, and prevent the elastic covers 140 from overflowing to the periphery when stressed (e.g., during braking) under the restriction of the shells 130, so as to avoid an excessively large gap between each shell 130 and the corresponding elastic cover 140. Thus, elastic deformation is smaller under the same force, so that a forward shifting feeling of an occupant during braking is lower and comfort is higher. For example, a first protrusion 134 may be formed around the periphery of each shell 130, a first groove 135 is formed between the first protrusion 134 and the support structure 131, correspondingly, a second groove 142 and a second protrusion 143 are arranged on a surface of each elastic cover 140 close to the shell 130, the first protrusion 134 is fitted with the second groove 142, and the first groove 135 is fitted with the second protrusion 143, so as to realize positioning and fixation between the elastic cover 140 and the shell 130. At this time, the second protrusion 143 in the middle part is a main stress area, and the second groove 142 at the edge is an avoidance area, so as to avoid stress concentration at an edge area of the elastic cover 140 when the shell 130 deflects.

In the transmission mechanism 100 according to the embodiment of the present invention, transmission is realized through mutual engaging between the metal teeth of the worm 110 and the plastic teeth of the nut 120, so that noise can be reduced and acoustic performance can be improved; the nut shaft 122 of the nut 120 may be a combination of a metal part and a plastic part, or in a form that a metal shaft is sleeved on an outer side of a plastic shaft, so that fitting between the lead screw 200 and the nut 120 is also fitting between metal and plastic, thereby reducing noise during fitting between the lead screw 200 and the nut 120; the plastic bushings 132 arranged on the shells 130 support the worm 110, improving roughness of a fitting surface with the worm 110, improving mechanical efficiency and reducing noise; the two elastic covers 140 can not only improve acoustic performance but also eliminate manufacturing gaps; the two elastic covers 140 and the two shells 130 are provided with complementary-shaped structures, which can limit deformation of the two elastic covers 140 during braking, so that a forward shifting feeling of an occupant during braking is lower and comfort is higher.

It should be noted that the present invention (e.g., inventive concepts, etc.) has been described in the description of the present patent document and/or illustrated in the figures according to exemplary embodiments; the embodiments of the present invention are provided by way of example only and are not intended to limit the scope of the present invention. The structures and/or arrangements of elements embodied in the present invention as described in the description and/or illustrated in the figures are illustrative only. Although exemplary embodiments of the present invention have been described in detail in the present patent document, those of ordinary skill in the art will readily understand that equivalents, modifications, variations, etc. of the subject matter of the exemplary embodiments and alternative embodiments are possible and are considered to be within the scope of the present invention; all such subject matter (e.g., modifications, variations, embodiments, combinations, equivalents, etc.) is intended to be included within the scope of the present invention. It should also be noted that various/other modifications, variations, substitutions, equivalents, changes, omissions, etc. may be made in the configuration and/or arrangement (e.g., in terms of concept, design, structure, apparatus, form, assembly, construction, means, function, system, process/method, steps, order of process/method steps, operations, operating conditions, performance, materials, compositions, combinations, etc.) of the exemplary embodiments without departing from the scope of the present invention; all such subject matter (e.g., modifications, variations, embodiments, combinations, equivalents, etc.) is intended to be included within the scope of the present invention. The scope of the present invention is not intended to be limited to the subject matter (e.g., details, structures, functions, materials, acts, steps, order, systems, results, etc.) described in the description and/or figures of the present patent document. It is contemplated that the claims of the present patent document will be properly construed to cover the full scope of the subject matter of the present invention (e.g., including any and all such modifications, variations, embodiments, combinations, equivalents, etc.); it is to be understood that the terminology used in the present patent document is for the purpose of describing the subject matter of the exemplary embodiments and not for limiting the scope of the present invention.

It should also be noted that, according to exemplary embodiments, the present invention may include conventional techniques (e.g., techniques implemented and/or integrated in exemplary embodiments, modifications, variations, combinations, equivalents) or may include any other applicable techniques (now and/or future) capable of performing the functions and processes/operations described in the description and/or illustrated in the figures. All such techniques (e.g., techniques implemented in embodiments, modifications, variations, combinations, equivalents, etc.) are considered to be within the scope of the present invention in the present patent document.

## Claims

1. A transmission mechanism, comprising a worm and a nut, wherein an outer side of the worm is provided with first teeth, an outer side of the nut is provided with second teeth, the first teeth and the second teeth are engaged with each other, the nut is internally hollow, an inner wall of the nut is provided with third teeth, the nut is configured to be sleeved on an outer side of a lead screw, and the third teeth are configured to fit with fourth teeth on an outer side of the lead screw.

2. The transmission mechanism according to claim 1, wherein the nut comprises a sleeve and a nut shaft, wherein the sleeve is sleeved on an outer side of the nut shaft and fixedly connected with the nut shaft; the second teeth are formed on an outer side of the sleeve; the nut shaft is internally hollow, and the third teeth are formed on an inner wall of the nut shaft.

3. The transmission mechanism according to claim 1, wherein the worm and the first teeth are both made of metal, and the second teeth are made of plastic.

4. The transmission mechanism according to claim 2, wherein the nut shaft and the third teeth are both made of metal; and/or
a metal shaft shoulder is arranged on the nut shaft, and the metal shaft shoulder abuts against one side of the sleeve.

5. The transmission mechanism according to claim 2, wherein a first limiting structure is arranged on an outer side of the nut shaft, a second limiting structure is arranged on an inner wall of the sleeve, and the first limiting structure and the second limiting structure are fitted with each other to limit relative rotation between the sleeve and the nut shaft.

6. The transmission mechanism according to claim 2, wherein the nut shaft comprises a first metal shaft and a first plastic shaft which are connected in an axial direction, wherein the sleeve is sleeved on outer sides of the first metal shaft and the first plastic shaft and fixedly connected with the first metal shaft and the first plastic shaft; the first metal shaft is internally hollow and provided with first metal internal teeth on an inner wall thereof, the first plastic shaft is internally hollow and provided with first plastic internal teeth on an inner wall thereof, and the first plastic internal teeth and the first metal internal teeth jointly form the third teeth.

7. The transmission mechanism according to claim 2, wherein the nut shaft comprises a second metal shaft and a second plastic shaft, wherein the second metal shaft is internally hollow and provided with second metal internal teeth on an inner wall thereof, and the second plastic shaft is internally hollow and provided with second plastic internal teeth on an inner wall thereof; the sleeve is sleeved on an outer side of the second metal shaft and fixedly connected with the second metal shaft, the second metal shaft is sleeved on an outer side of the second plastic shaft and fixedly connected with the second plastic shaft, the second plastic internal teeth are identical to the second metal internal teeth, and the second plastic internal teeth form the third teeth.

8. The transmission mechanism according to claim 2, further comprising two shells arranged oppositely in a radial direction of the nut shaft, wherein the two shells are detachably spliced together to form a box body, an installation space is formed between the two shells, the worm and the nut are located or partially located in the installation space, two ends of the worm are respectively installed on the two shells, outwardly protruding support structures are formed at two ends of the box body, and two ends of the nut shaft are respectively placed on the two support structures.

9. The transmission mechanism according to claim 8, wherein a bushing is arranged on each shell and used for supporting an end of the worm; the two shells are made of alloy or metal, and the bushing is made of plastic.

10. The transmission mechanism according to claim 9, wherein a third limiting structure is arranged on the bushing, a fourth limiting structure is arranged on each shell, and the third limiting structure and the fourth limiting structure are fitted with each other to limit relative rotation between the bushing and the shell.

11. The transmission mechanism according to claim 8, wherein elastic covers are respectively fixed at two ends of the box body in the axial direction of the nut shaft, each elastic cover is provided with a through hole, and the support structures are located in the through holes.

12. The transmission mechanism according to claim 11, wherein complementary-shaped structures are arranged on the shells and the elastic covers to realize positioning and fixation between the shells and the elastic covers.
